# EUROPÄISCHE PATENTSCHRIFT

(11) **EP 3 097 303 B1**
(45) Veröffentlichungstag und Bekanntmachung des Hinweises auf die Patenterteilung: **28.03.2018**
(21) Anmeldenummer: 15705265.5
(22) Anmeldetag: 12.02.2015
(51) Int. Cl.: F02C 7/22, F02C 7/28, F16L 19/02, F16L 19/025, F02M 55/00

(54) **KONUSVERSCHRAUBUNG EINER BRENNSTOFFLEITUNG**
CONICAL SCREW CONNECTION OF A FUEL LINE
RACCORD CONIQUE PAR VISSAGE D'UN CONDUIT DE COMBUSTIBLE

(30) Priorität: 03.03.2014 DE 102014203817
(43) Veröffentlichungstag der Anmeldung: 30.11.2016
(73) Patentinhaber: Siemens Aktiengesellschaft, 80333 München (DE)
(72) Erfinder: DÖNGES, Ulrich, 47239 Duisburg (DE); KRONER, Peter, 40789 Monheim am Rhein (DE); HESSE, Werner, 45721 Haltern am See (DE); SEIDEL, Falk, 46499 Hamminkeln (DE); WEBER, Gerd, 46537 Dinslaken (DE)
(86) Internationale Anmeldenummer: PCT/EP2015/052925
(87) Internationale Veröffentlichungsnummer: WO 2015/132056

(56) Entgegenhaltungen:
- WO-A1-2007/105660
- DE-A1- 4 116 540
- DE-B4-102005 063 545
- JP-A- 2007 309 232

## Beschreibung

Die vorliegende Erfindung betrifft eine Brennstoffleitung einer Strömungsmaschine mit einer Konusverschraubung, wobei die Konusverschraubung mindestens einen Verschraubungsstutzen aufweist, in welchen ein Dichtkegel mit einer Dichtkegelfläche und einer daran anschließenden Dichtkegelstirnseite eines Verschraubungskörpers formschlüssig eingeführt ist, und Verschraubungsstutzen und Verschraubungskörper miteinander direkt oder indirekt verschraubt sind, wobei der Dichtkegel ein metallisches, flächiges Dichtelement aufweist, welches in einer Aufnahme der Dichtkegelfläche aufgenommen ist, wobei das flächige Dichtelement ein Metall umfasst, welches weicher ist als das Material des Dichtkegels.

Eine solche Brennstoffleitung ist beispielsweise aus der DE 10 2005 063 545 B4 bekannt.

Bei Strömungsmaschinen werden Konusverschraubungen in einer Brennstoffleitung standardgemäß eingesetzt, um insbesondere die geometrische Anordnung der Brennstoffleitung problemlos auf der Außenseite des Brenners der Strömungsmaschine vornehmen zu können. Bei den Gasturbinen der Anmelderin werden bspw. 24°-Konusverschraubungen nach ISO 8434-4 eingesetzt.

Bei den typischerweise in Strömungsmaschinen auftretenden hohen Betriebstemperaturen sind Brennstoffleitungen bzw. von solchen umfasste Konusverschraubungen und deren Einzelteile ebenfalls relativ hohen Temperaturen bzw. auch hohen Temperaturschwankungen ausgesetzt. Aus diesem Grund werden für solche Konusverschraubungen im Normalfall keine Weichstoffdichtungen eingesetzt, da solche den hohen Temperaturen nicht standhalten könnten bzw. ein zu schnelles Altern dieser erfolgen würde. Die insofern typischerweise eingesetzten Konusverschraubungen bei den Brennstoffleitungen weisen einen metallischen Dichtkegel auf, welcher in einen ebenfalls metallischen Verschraubungsstutzen formschlüssig eingeführt ist, wobei beide zusätzlich zur Ausbildung eines Dichtschluss miteinander verschraubt werden können. Eine derartige Konusverschraubung ist etwa aus der DE 10 2005 028 188 A1 bekannt. Die Dichtwirkung der beiden sich über die Dichtflächen in Kontakt befindenden metallischen Bauteile ist im Neubauzustand normalerweise ausreichend gut. Allerdings nimmt diese Dichtwirkung im Laufe der Betriebsdauer vorwiegend wegen der bei Betrieb auftretenden Schwingungen ab. Ebenfalls nimmt die Dichtwirkung aufgrund von Montageeinwirkungen, differentiellen Temperaturdehnungen sowie durch nicht ausreichend sachgemäße Handhabung der Brennstoffleitungen ab, weshalb nach einer gewissen Nutzungsdauer die Dichtwirkung unter ein zulässiges Maß herabgesetzt ist.

Aufgrund dieser verminderten Dichtwirkung zwischen dem Dichtkegel und Verschraubungsstutzen ergeben sich Undichtigkeiten, die es zu vermeiden gilt. Der Stand der Technik begegnet diesen Undichtigkeiten nach ausreichend langer Nutzungsdauer einerseits durch ein Ersetzen des Dichtkegels, indem dieser von dem ihn umfassenden Verschraubungskörper abgetrennt wird und auf den so verbleibenden Verschraubungskörper ein neuer Dichtkegel aufgeschweißt wird. Um die Dichtigkeit der Schweißverbindung zwischen neuem Dichtkegel und neuem Verschraubungskörper gewährleisten zu können, muss eine zerstörungsfreie Schweißnahtprüfung durchgeführt werden.

Sowohl die Abtrennung des Dichtkegels vom Verschraubungskörper wie auch die Ersetzung desselben durch einen neuen anzuschweißenden Dichtungskegel sind Arbeitsaufwendungen, die viel Zeit sowie Kosten und Material erfordern.

Andererseits schlägt der Stand der Technik vor, wie etwa in der DE 41 16 540 C2 beschrieben, lose Abdichtungen in den Verschraubungsstutzen einzulegen, welche dann zur Ausübung einer Dichtwirkung durch den Dichtkegel und den Verschraubungsstutzen verpresst werden. Problematisch an diesem Ansatz ist jedoch die mangelnde Genauigkeit, mit welcher derartige lose Abdichtungen in den Verschraubungsstutzen eingesetzt werden können. Die Praxis zeigt nämlich, dass bereits eine etwas exzentrisch eingesetzte Abdichtung zu einer ungleichmäßigen Anordnung der Abdichtung auch im verpressten Zustand und damit zu einer ungenügenden Dichtwirkung Anlass gibt. Gerade aber in mit hohen Drücken beaufschlagten Brennstoffleitungen stellt eine solche ungenügende Dichtwirkung ein Sicherheitsrisiko dar, welches es zu vermeiden gilt.

Aufgabe der vorliegenden Erfindung ist es, diese aus dem Stand der Technik bekannten Nachteile zu vermeiden. Insbesondere ist es Aufgabe der vorliegenden Erfindung eine Brennstoffleitung bzw. eine davon umfasste Konusverschraubung bzw. deren Bauteile vorzuschlagen, welche eine Ersetzung des Dichtkegels durch Abtrennung und erneutes Anschweißen eines Austauschdichtkegels vermeiden kann. Ebenso soll eine möglichst sichere Dichtwirkung gewährleistet werden. Es ist somit auch Aufgabe der Erfindung, eine sichere und kostengünstige Konusverschraubung vorzuschlagen, die einen verhältnismäßig geringen Wartungsaufwand erfordert.

Diese der Erfindung zugrundeliegenden Aufgaben werden gelöst durch eine Brennstoffleitung gemäß Anspruch 1.

Insbesondere werden diese der Erfindung zugrundeliegenden Aufgaben gelöst durch eine Brennstoffleitung einer Strömungsmaschine mit einer Konusschraubung, wobei die Konusverschraubung mindestens einen Verschraubungsstutzen aufweist, in welchen ein Dichtkegel mit einer Dichtkegelfläche und einer daran anschließenden Dichtkegelstirnseite eines Verschraubungskörpers formschlüssig eingeführt ist, und Verschraubungsstutzen und Verschraubungskörper miteinander direkt oder indirekt verschraubt sind, wobei der Dichtkegel ein metallisches, flächiges Dichtelement aufweist, welches in einer Aufnahme der Dichtkegelfläche aufgenommen ist, wobei das flächige Dichtelement ein Metall umfasst, welches weicher ist als das Material des Dichtkegels und wobei das flächige Dichtelement sich über die Dichtkegelfläche lediglich über die Flächenbereiche erstreckt, welche zum Formschluss mit dem Verschraubungsstutzen vorgesehen sind. Infolgedessen kann das flächige Dichtelement einerseits vollständig für die zu erreichende Dichtwirkung herangezogen werden, erfordert jedoch keine Materialverschwendung, da lediglich nur die für die Herbeiführung der Dichtwirkung vorgesehenen Flächenbereiche von dem flächigen Dichtelement belegt sind.

Entsprechend der Erfindung ist vorgesehen, dass das flächige Dichtelement ein Metall umfasst, welches weicher ist als das Metall des Dichtkegels selbst. Die Härte des Materials bestimmt sich hierbei bspw. nach den materialüblichen Härteskalen nach EN ISO 6508-1, wobei etwa in der Einheit Rockwell benutzt werden kann. Durch Vorsehen eines verhältnismäßig weicheren flächigen Dichtelementes kann sich dieses bei Kontaktschluss zwischen Verschraubungsstutzen und Verschraubungskörper leicht an die Gegenfläche anformen, um so eine besonders gute Dichtwirkung zu erreichen. Somit ist es bspw. nicht notwendig, den Verschraubungskörper bzw. den Dichtkegel selbst aus einem ausreichend weichen Metall herzustellen, da die Dichtwirkung insbesondere vollständig durch das flächige Dichtelement vermittelt werden kann. Infolgedessen kann der Verschraubungskörper möglicherweise auch aus einem härteren Material gefertigt sein, welches etwa den auftretenden Temperaturschwankungen bei einer Brennstoffleitung einer Strömungsmaschine besser angepasst ist. Weiterhin ist gewährleistet, dass das flächige Dichtelement weitgehend korrekt und zentriert in den Verschraubungsstutzen eingeführt ist, so dass auch nach dem Verspannen von Dichtkegel und Verschraubungsstutzen eine ausreichend sichere Dichtwirkung erreicht werden kann.

An dieser Stelle ist darauf hinzuweisen, dass die Konusverschraubung von der erfindungsgemäßen Brennstoffleitung umfasst ist. Die Konusverschraubung weist mindestens einen Verschraubungsstutzen und einen Verschraubungskörper auf, welche miteinander direkt oder indirekt verschraubt werden können, um damit eine Strömungsbegrenzung im Sinne eines Leitungsabschnitts ausbilden zu können, die zur Leitung von Brennstoff geeignet ist. Die erfindungsgemäße Brennstoffleitung kann somit mit einer Konusverschraubung identisch sein, bzw. diese als Bestandteil umfassen. Weitere Strömungsbegrenzungsabschnitte, d.h. Leitungsabschnitte müssen insofern nicht mehr umfasst sein.

Verschraubungsstutzen und Verschraubungskörper können direkt oder indirekt miteinander verschraubt sein. Eine direkte Verschraubung beider Bauteile erfordert eine unmittelbare Verbindung beider Bauteile mittels eines geeigneten Schraubgewindes. Eine indirekte Verbindung beider Bauteile erlaubt eine Befestigung beider über möglicherweise weitere Bauteile, wie einer Überwurfmutter, die lediglich mit einem der beiden Bauteile verschraubt ist.

An dieser Stelle sei ebenfalls darauf hingewiesen, dass die erfindungsgemäße Dichtkegelfläche als eine seitliche, nach außen weisende Dichtfläche des Dichtkegels ausgebildet ist. Die Dichtkegelfläche umfasst hierbei insbesondere nicht die Dichtkegelstirnseite, welche den endseitigen Abschluss des Dichtkegels ausbildet. Dichtkegelfläche und Dichtkegelstirnseite können beiden ohne Kanten ineinander übergehen. Der Formschluss zwischen Dichtkegel und Verschraubungsstutzen ist hierbei typischerweise durch die Dichtkegelfläche und eine geeignete Gegenfläche des Verschraubungsstutzens ausgebildet. Ebenfalls ist es möglich, dass die Dichtfläche weitere Flächenabschnitte des Dichtkegels, insbesondere der Dichtkegelstirnseite mit umfasst.

Die von dem Dichtkegel umfasste Aufnahme für das metallische, flächige Dichtelement ist zur sicheren Aufnahme des flächigen Dichtelementes auf dem Dichtkegel vorgesehen. Das flächige Dichtelement bedeckt somit einen Teil der Dichtkegelfläche und dient nach entsprechender Aufnahme zur Ausbildung eines Dichtschlusses mittels Formschluss mit einer geeigneten Gegenfläche des Verschraubungsstutzens. Bevorzugt ist die Aufnahme hierbei als Ausnehmung ausgebildet, auf welche bzw. in welche das flächige Dichtelement eingesetzt werden kann.

Erfindungsgemäß gewährleistet somit nicht der direkte Materialkontakt von Dichtkegel und Verschraubungsstutzen die Dichtwirkung der Konusverschraubung, sondern der Materialkontakt zwischen einerseits dem Dichtkegel mit dem flächigen Dichtelement, und andererseits zwischen dem flächigen Dichtelement und der entsprechenden Gegenfläche des Verschraubungsstutzens. Aufgrund des Vorsehens des metallischen flächigen Dichtelementes kann einerseits gewährleistet werden, dass die Dichtung auch bei hohen Temperaturen, wie sie auch bei Strömungsmaschinen auftreten, keine übermäßige Alterung der Dichtung zwischen Dichtkegel und Verschraubungsstutzen erfahren.

Weiter kann das metallische flächige Dichtelement auch Ungleichheiten der metallischen Kontaktflächen von Dichtkegel und Gegenfläche des Verschraubungsstutzens vorteilhaft ausgleichen. So können etwa Kratzer, bzw. leichte Verformungen oder andere Beschädigungen auf diesen Flächen durch das metallische flächige Dichtelement ausgeglichen werden, indem sich dieses entsprechend anformt.

Darüber hinaus ist es erfindungsgemäß nicht mehr erforderlich, nach Auftreten von Undichtigkeiten zwischen den Dichtflächen nach einer entsprechenden Nutzungsdauer der Konusverschraubung den Dichtkegel vom Verschraubungskörper abzutrennen und durch einen Neuen zu ersetzen. Vielmehr kann nun lediglich das metallische flächige Dichtelement von dem Dichtkegel entfernt werden, und durch ein neues flächiges Dichtelement ersetzt werden. Der Dichtkegel kann somit mit dem Verschraubungskörper weiter verbunden bleiben. Infolgedessen ist keine aufwendige schweißtechnische Ersetzung des Dichtkegels erforderlich, wodurch Zeit, Geld sowie Material eingespart werden können.

Gemäß einer ersten besonders bevorzugten Ausführungsform der erfindungsgemäßen Brennstoffleitung ist vorgesehen, dass das flächige Dichtelement in seiner Ausdehnung in Längserstreckungsrichtung des Dichtkegels bis zum Übergang von Dichtkegelfläche zur daran anschließenden Dichtkegelstirnseite reicht. Die Längserstreckungsrichtung des Dichtkegels entspricht hierbei der Strömungsrichtung des von dem Verschraubungskörper geleiteten Brennstoffstroms. Der Übergang von Dichtkegelfäche zur daran anschließenden Dichtkegelstirnseite ist hierbei typischerweise durch einen Randbereich zwischen beiden ausgebildet. Dieser Randbereich kann bspw. als scharfe wie auch abgerundete Kante ausgebildet sein. Aufgrund der Erstreckung des flächigen Dichtelements bis zum Übergang der Dichtkegelfläche an die Dichtkegelstirnseite kann so ein leichtes Aufstecken eines bereits vorgeformten flächigen Dichtelementes auf den Dichtkegel vorgenommen werden. Insbesondere ist das flächige Dichtkegelelement in eine Ausformung der Dichtkegelfläche einzusetzen, und kann so zwischen der Aussparungsfläche und dem flächigen Dichtelement einen ausreichend dichtenden Kontaktschluss herstellen. Ausführungsgemäß ist es also möglich, das bereits vorgeformte flächige Dichtelement entsprechend einer Kappe auf einen endständigen Bereich des Dichtkegels aufzustecken, ohne weitere Formanpassungen an dem flächigen Dichtelement vornehmen zu müssen. Dies erleichtert sowohl den Aufsatz wie auch den Austausch des flächigen Dichtelements.

Gemäß einer Weiterbildung dieser Idee ist vorgesehen, dass das flächige Dichtelement zudem einen Umformungsabschnitt aufweist, welcher an den Übergang von Dichtkegelfläche zur daran anschließenden Dichtkegelstirnseite angeformt ist. Es kann somit ein durchgehender flächiger Übergang zwischen Dichtkegelfläche und Dichtkegelstirnseite mit dem flächigen Dichtelement kontaktiert werden, so dass sich dieses von Dichtkegelfläche zur Dichtkegelstirnseite erstrecken kann. Dadurch kann eine leichtere Zentrierung und Passung des flächigen Dichtelements bei Aufstecken wie beim Ersetzen desselben erreicht werden. Insbesondere ist der Umformungsabschnitt des flächigen Dichtelementes von einer geeignet angepassten Aufnahme der Dichtkegelstirnseite sowie der Dichtkegelfläche aufgenommen. Diese Aufnahme kann hierbei auch als geeignete Aussparung ausgebildet sein.

Entsprechend einer weiteren Ausführungsform der erfindungsgemäßen Brennstoffleitung ist vorgesehen, dass das flächige Dichtelement eine im Wesentlichen gleichmäßige Dicke aufweist, die insbesondere nicht größer als 1,0 mm ist. Aufgrund dieser Dickenausformung können somit geeignete Bleche zu einem flächigen Dichtelement umgeformt werden. Aufgrund der maximalen Dicke von 1,0 mm kann zudem besonders materialschonend und damit kostensparend gearbeitet werden.

Gemäß einer weiteren besonders bevorzugten Ausführungsform der Erfindung ist vorgesehen, dass das flächige Dichtelement als größten Stoffanteil ein Edelmetall aufweist, insbesondere Silber. Edelmetalle sind im Vergleich zu anderen Metallen verhältnismäßig weich und biegsam sowie chemisch gegenüber den meisten Stoffen inert. Damit eignen sich Edelmetalle besonders bevorzugt zum Einsatz in einer Brennstoffleitung, bei welcher aufgrund der hohen Temperaturen und der Reaktivität des darin geführten Brennstoffs auch die chemische Reaktionsfähigkeit ein wesentliches technisches Merkmal ist. Silber ist zudem im Vergleich zu zahlreichen anderen Edelmetallen verhältnismäßig kostengünstig und leicht zu bearbeiten. Damit eignet sich Silber als größter Stoffanteil in dem flächigen Dichtelement besonders.

Gemäß einer weiteren besonders bevorzugten Ausführungsform der Erfindung ist vorgesehen, dass das flächige Dichtelement auf den Dichtkegel aufgesteckt ist, ohne ein Befestigungsmittel zwischen beiden vorzusehen. Dadurch wird einerseits die Aufbringung des flächigen Dichtelementes auf den Dichtkegel erleichtert, wie auch der wartungsgemäße Ersatz des flächigen Dichtelementes. Im Wartungsfall kann insbesondere die Abnahme des flächigen Dichtelements von dem Dichtkegel verhältnismäßig leicht und ohne weiteren Geräteaufwand erreicht werden. So ist es bspw. ausreichend, das flächige Dichtelement etwa mit einer Klinge von dem Dichtkegel abzuziehen.

Nachfolgend wird die Erfindung anhand einzelner Figuren im Detail beschrieben. Hierbei ist darauf hinzuweisen, dass die Figuren lediglich schematisch zu verstehen sind, und keine Einschränkung hinsichtlich der Ausführbarkeit der Erfindung bedeuten.

Weiter sei darauf hingewiesen, dass die technischen Merkmale mit gleichen Bezugszeichen gleiche technische Wirkungen aufweisen.

Die nachfolgend dargestellten technischen Merkmale werden zudem in beliebiger Kombination miteinander beansprucht, soweit die Kombination dazu geeignet ist, die der Erfindung zugrundeliegende Aufgabe zu lösen.

Hierbei zeigen:
- Figur 1: eine seitliche Schnittansicht einer Ausführungsform der erfindungsgemäßen Brennstoffleitung 100 mit Konusverschraubung 1;
- Figur 2: eine weitere Ausführungsform der erfindungsgemäßen Brennstoffleitung 100 mit Konusverschraubung 1 in seitlicher Schnittansicht;
- Figur 3: eine perspektivische Seitenansicht eines flächigen Dichtelementes 10 wie es bspw. in einer Ausführungsform der Konusverschraubung 1 gemäß Figur 2 eingesetzt werden kann;
- Figur 4: eine seitliche Schnittansicht durch einen Teilbereich eines Dichtkegels 6 gemäß einer weiteren Ausführungsform der Erfindung.

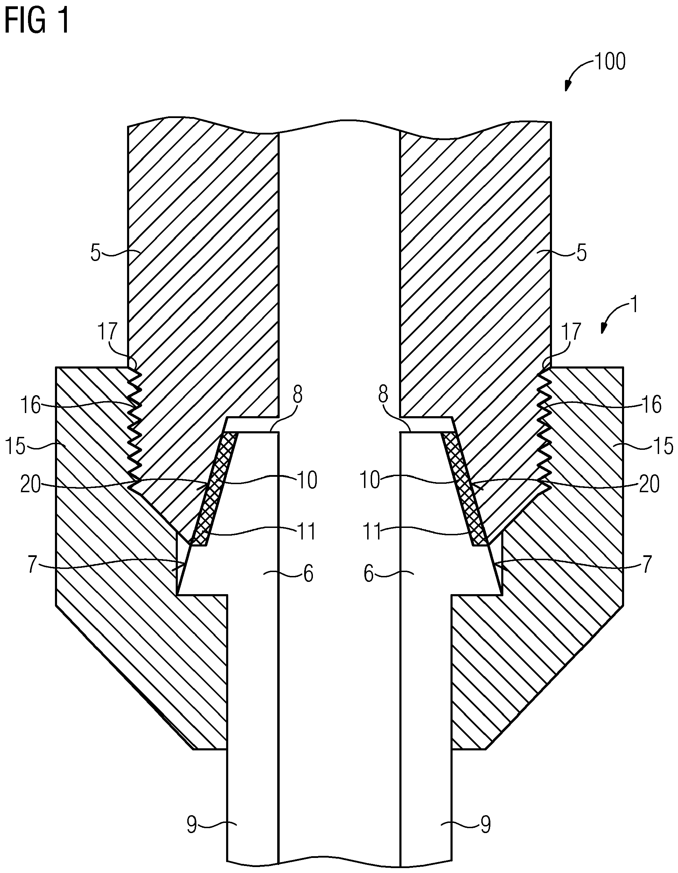

Figur 1 zeigt eine seitliche Schnittansicht durch eine Brennstoffleitung 100 mit Konusverschraubung 1. Die Konusverschraubung 1 umfasst hierbei einen Verschraubungsstutzen 5, welcher mit einem Verschraubungskörper 9 indirekt verschraubt ist. Zur indirekten Verschraubung ist eine Überwurfmutter 15 vorgesehen, welche über ein erstes Gewinde 16 mit einem zweiten Gewinde 17 des Verschraubungsstutzens verschraubt ist. Aufgrund der Verschraubung der beiden Bauteile kann der Verschraubungskörper 9, der den Dichtkegel 6 umfasst mit dem Verschraubungsstutzen 5 verspannt werden. Durch die Verspannung ergibt sich ein formschlüssiger Presskontakt zwischen Dichtkegel 6 und einer nicht weiter mit Bezugszeichen versehenen Gegenfläche des Verschraubungsstutzens 5, wodurch eine Dichtwirkung zwischen beiden Bauteilen erzielt wird. (Zur besseren Veranschaulichung der einzelnen Teile, sind diese in Explosionssicht gezeichnet, also der direkte Kontakt ist vorliegend nicht ausdrücklich dargestellt.)

Die Konusverschraubung 1 weist einen Dichtkegel 6 mit einer Dichtkegelfläche 7 auf, sowie einer daran anschließenden Dichtkegelstirnseite 8. Die Dichtkegelfläche 7 weist zudem eine Aufnahme 11 auf, in welcher bzw. auf welcher ein metallisches, flächiges Dichtelement 10 aufgebracht ist. Das flächige Dichtelement 10 erstreckt sich hierbei über die Teilbereiche der Dichtkegelfläche 7, die für einen Formschluss mit der entsprechenden Gegenfläche des Verschraubungsstutzens 5 vorgesehen sind.

An dieser Stelle sei darauf hingewiesen, dass im Rahmen der Erfindung das metallische flächige Dichtelement 10 als Teil des Dichtkegels 6 dahingehend betrachtet werden soll, dass der Dichtschluss zwischen Dichtkegel 6 und Verschraubungsstutzen 5 betroffen ist. Insofern sollen sich keine Widersprüche ergeben, wenn zwischen einer Dichtwirkung zwischen dem Dichtkegel 6 bzw. der Dichtkegelfläche 7 und dem Verschraubungsstutzen 5 gesprochen wird. Dem Fachmann ist hierbei ersichtlich, dass eine solche Dichtwirkung erfindungsgemäß in erster Linie durch das metallische flächige Dichtelement 10 vermittelt wird, dessen Härte zudem noch geringer ist als die Härte des Materials des Dichtkegels 6.

Ist die Konusverschraubung 1 geschlossen, d.h. Verschraubungsstutzen und Verschraubungskörper 9 sind miteinander durch Vermittlung der Überwurfmutter miteinander verspannt, wird das flächige Dichtelement 10 durch die Verpressung von Dichtkegel 6 und einer geeigneten Gegenfläche des Verschraubungsstutzens 5 an entsprechende Flächenabschnitte angeformt. Dadurch wird eine besonders effiziente Dichtwirkung vermittelt.

Ausführungsgemäß ist zudem vorgesehen, dass das flächige Dichtelement in seiner Ausdehnung in Längserstreckungsrichtung des Dichtkegels 6 bis zum Übergang von Dichtkegelfläche 7 zur daran anschließenden Stirnseite 8 reicht. Folglich kann das flächige Dichtelement bspw. als Konus ausgeformt sein und auf dem Dichtkegel 6 aufgesteckt sein. Beide Bauteile bedürfen hierbei keiner weiteren Verbindungsmittel, da der Presssitz zwischen Dichtkegel 6 und Verschraubungsstutzen 5 eine ausreichende Verbindungsfestigkeit zwischen Dichtkegel 6 und flächigem Dichtelement 10 gewährleisten kann.

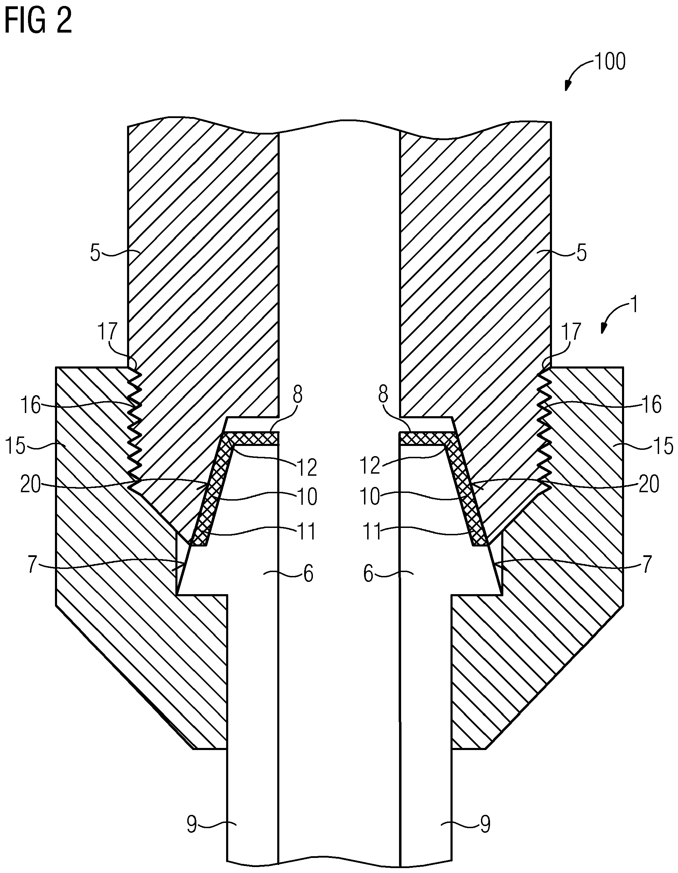

Figur 2 zeigt eine weitere Ausführungsform der erfindungsgemäßen Brennstoffleitung 100 in einer seitlichen Schnittansicht. Hierbei unterscheidet sich die in Figur 2 gezeigte Ausführungsform von der in Figur 1 gezeigten Ausführungsform lediglich dahingehend, dass das flächige Dichtelement 10 einen Umformungsabschnitt 12 aufweist, welcher an einen Übergang von Dichtkegelfläche 7 zur daran anschließenden Dichtkegelstirnseite 8 angeformt ist. Das flächige Dichtelement bildet somit einen durchgehenden umgeformten Flächenabschnitt, welcher sich von der Dichtkegelfläche zur Dichtkegelstirnseite erstreckt. Vorteilhaft an dieser Ausführungsform ist, dass eine leichtere Zentrierung und Passung des so ausgeformten flächigen Dichtelementes 10 im Vergleich zum Dichtkegel 6 erreicht werden.

Gemäß einer nicht weiter gezeigten Ausführungsform kann auch vorgesehen sein, dass das flächige Dichtelement 10 an der Dichtkegelstirnseite 8 sich nicht über die vollständige Dichtkegelstirnseite 8 erstreckt, sondern lediglich in einem ausgesparten Teilbereich vorgesehen ist.

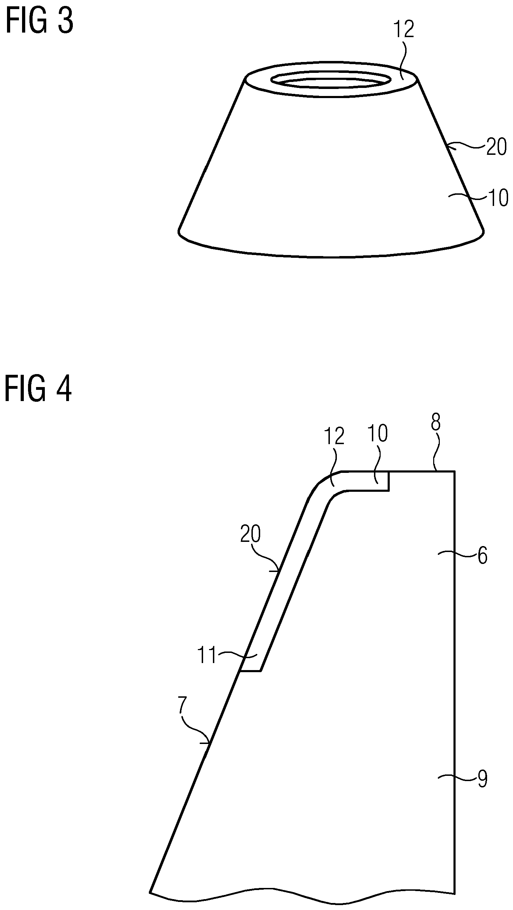

Figur 3 zeigt eine seitliche perspektivische Ansicht eines flächigen Dichtelementes 10, welches konusförmig ausgebildet ist. Zudem weist das konusförmige flächige Dichtelement 10 einen Umformungsabschnitt 12 auf, der zur Anbringung an einer Dichtkegelstirnseite 8 (vorliegend nicht gezeigt) vorgesehen ist. Die in Figur 3 gezeigte Ausführungsform des flächigen Dichtelementes 10 kann bspw. auf einen Dichtkegel 6, wie er in der Ausführungsform nach Figur 2 gezeigt ist, angebracht sein. Hierbei vermittelt die Außenseite des flächigen Dichtelementes 10 eine Kontaktfläche 20, die zur Ausbildung eines Formschlusses mit einer geeigneten Gegenfläche des Verschraubungsstutzens 5 vorgesehen ist.

Figur 4 zeigt eine weitere Ausführungsform eines Dichtkegels 6 in seitlicher Schnittansicht. Der gezeigte Bereich umfasst lediglich die Dichtkegelfläche 7 sowie die Dichtkegelstirnseite 8, welche von dem Dichtkegel 6 des Verschraubungskörpers 9 umfasst sind. Weiter weist die Dichtkegelfläche 7 eine Aufnahme 11 auf, die als Ausnehmung ausgebildet ist, und in welche ein flächiges Dichtelement 10 auf- bzw. eingesetzt ist. Ebenso weist die Dichtkegelstirnseite 8 eine daran anschließende und nicht mit Bezugszeichen versehene Ausnehmung auf, so dass ein weiterer Abschnitt des flächigen Dichtelementes 10 davon aufgenommen werden kann. Das flächige Dichtelement 10 weist zudem einen Umformungsabschnitt 12 auf, welcher derart ausgeformt ist, dass er sich der Fläche der Ausnehmung von Dichtkegelfläche 7 und Dichtkegelstirnseite 8 anformt. Das flächige Dichtelement 10 ist somit als integraler Bestandteil des Dichtkegels 6 ohne Überstand ausgebildet. Zur Vermittlung der Dichtwirkung weist das flächige Dichtelement 10 eine nach außen gerichtete Kontaktfläche 20 auf, die mit einer geeigneten Gegenfläche eines nicht weiter gezeigten Verschraubungsstutzens 5 verpresst werden kann, um durch Formschluss eine Dichtwirkung herbeizuführen. Ebenfalls kann der Umformungsabschnitt 12 bzw. der der Dichtkegelstirnseite 8 zugeordnete Abschnitt des flächigen Dichtelementes 10 eine Dichtwirkung vermitteln.

Weitere Ausführungsformen ergeben sich aus den Unteransprüchen.

## Patentansprüche

1. Brennstoffleitung (100) einer Strömungsmaschine mit einer Konusverschraubung (1), wobei die Konusverschraubung (1) mindestens einen Verschraubungsstutzen (5) aufweist, in welchen ein Dichtkegel (6) mit einer Dichtkegelfläche (7) und einer daran anschließenden Dichtkegelstirnseite (8) eines Verschraubungskörpers (9) formschlüssig eingeführt ist, und Verschraubungsstutzen (5) und Verschraubungskörper (9) miteinander direkt oder indirekt verschraubt sind, wobei der Dichtkegel (6) ein metallisches, flächiges Dichtelement (10) aufweist, welches in einer Aufnahme (11) der Dichtkegelfläche (7) aufgenommen ist, wobei das flächige Dichtelement (10) ein Metall umfasst, welches weicher ist als das Material des Dichtkegels (6),
**dadurch gekennzeichnet, dass** das flächige Dichtelement (10) sich über die Dichtkegelfläche (7) lediglich über die Flächenbereiche erstreckt, welche zum Formschluss mit dem Verschraubungsstutzen (5) vorgesehen sind.

2. Brennstoffleitung gemäß Anspruch 1,
**dadurch gekennzeichnet, dass** das flächige Dichtelement (10) in seiner Ausdehnung in Längserstreckungsrichtung des Dichtkegels (6) bis zum Übergang von Dichtkegelfläche (7) zur daran anschließenden Dichtkegelstirnseite (8) reicht.

3. Brennstoffleitung gemäß Anspruch 2,
**dadurch gekennzeichnet, dass** das flächige Dichtelement (10) zudem einen Umformungsabschnitt (12) aufweist, welcher an einen Übergang von Dichtkegelfläche (7) zur daran anschließenden Dichtkegelstirnseite (8) angeformt ist.

4. Brennstoffleitung gemäß einem der vorhergehenden Ansprüche,
**dadurch gekennzeichnet, dass** das flächige Dichtelement (10) eine im Wesentlichen gleichmäßige Dicke aufweist, die insbesondere nicht größer als 1,0 mm ist.

5. Brennstoffleitung gemäß einem der vorhergehenden Ansprüche,
**dadurch gekennzeichnet, dass** das flächige Dichtelement (10) als größten Stoffanteil ein Edelmetall aufweist, insbesondere Silber.

6. Brennstoffleitung gemäß einem der vorhergehenden Ansprüche,
**dadurch gekennzeichnet, dass** das flächige Dichtelement (10) auf den Dichtkegel (6) aufgesteckt ist, ohne ein Befestigungsmittel zwischen beiden vorzusehen.

## Claims

1. Fuel line (100) of a turbomachine, having a conical screw connection (1), wherein the conical screw connection (1) has at least one screw connection piece (5) into which a sealing cone (6) with a sealing cone surface (7) and with a sealing cone face side (8), adjoining said sealing cone surface, of a screw connection body (9) is inserted with a form fit, and the screw connection piece (5) and screw connection body (9) are directly or indirectly screwed together, wherein the sealing cone (6) has a metallic, areal sealing element (10) which is received in a receptacle (11) of the sealing cone surface (7), wherein the areal sealing element (10) comprises a metal which is softer than the material of the sealing cone (6),
**characterized in that**
the areal sealing element (10) extends over the sealing cone surface (7) only over those surface regions which are provided for the form fit with the screw connection piece (5).

2. Fuel line according to Claim 1,
**characterized in that**
the areal sealing element (10) extends, in its extent in the longitudinal direction of extent of the sealing cone (6), as far as the transition from the sealing cone surface (7) to the sealing cone face side (8) adjoining said sealing cone surface.

3. Fuel line according to Claim 2,
**characterized in that**
the areal sealing element (10) furthermore has a deformation section (12) which is integrally formed at a transition from sealing cone surface (7) to the sealing cone face side (8) adjoining said sealing cone surface.

4. Fuel line according to one of the preceding claims,
**characterized in that**
the areal sealing element (10) has a substantially uniform thickness which is in particular no greater than 1.0 mm.

5. Fuel line according to one of the preceding claims,
**characterized in that**
the areal sealing element (10) has, as its greatest material fraction, a high-grade metal, in particular silver.

6. Fuel line according to one of the preceding claims,
**characterized in that**
the areal sealing element (10) is mounted onto the sealing cone (6) without the provision of a fastening means between these.

## Revendications

1. Conduit (100) pour du combustible d'une turbomachine ayant un vissage (1) à cône, le vissage (1) à cône ayant au moins une tubulure (5) de vissage, dans laquelle est introduit, à complémentarité de forme, un cône (6) d'étanchéité, ayant une surface (7) de cône d'étanchéité et un côté (8) frontal de cône d'étanchéité s'y raccordant d'un corps (9) de vissage, et la tubulure (5) de vissage et le corps (9) de vissage sont vissés l'un à l'autre, directement ou indirectement, le cône (6) d'étanchéité ayant un élément (10) d'étanchéité plat métallique, qui est reçu dans un logement (11) de la surface (7) de cône d'étanchéité, l'élément (10) d'étanchéité plat comprenant un métal plus tendre que le matériau du cône (6) d'étanchéité, **caractérisé en ce que** l'élément (10) d'étanchéité plat s'étend sur la surface (7) de cône d'étanchéité seulement sur les parties de surface prévues pour la complémentarité de forme avec la tubulure (5) de vissage.

2. Conduit pour du combustible suivant la revendication 1,
**caractérisé en ce que**
l'élément (10) d'étanchéité plat va dans son étendue, dans la direction d'étendue longitudinale du cône (6) d'étanchéité, jusqu'à la transition de la surface (7) de cône d'étanchéité au côté (8) frontal de cône d'étanchéité s'y raccordant.

3. Conduit pour du combustible suivant la revendication 2,
**caractérisé en ce que**
l'élément (10) d'étanchéité plat a en outre une partie (12) de déformation formée à une transition de la surface (7) de cône d'étanchéité au côté (8) frontal de cône d'étanchéité s'y raccordant.

4. Conduit pour du combustible suivant l'une des revendications précédentes,
**caractérisé en ce que**
l'élément (10) d'étanchéité plat a une épaisseur sensiblement uniforme, qui, notamment, n'est pas plus grande que 1,0 mm.

5. Conduit pour du combustible suivant l'une des revendications précédentes,
**caractérisé en ce que**
l'élément (10) d'étanchéité plat comporte, pour la proportion la plus grande, un métal précieux, notamment de l'argent.

6. Conduit pour du combustible suivant l'une des revendications précédentes,
**caractérisé en ce que**
l'élément (10) d'étanchéité plat est enfilé sur le cône (6) d'étanchéité, sans prévoir un moyen de fixation entre eux.
